**Europäisches Patentamt**

**European Patent Office**

**Office européen des brevets**

(11) Veröffentlichungsnummer: **0 017 949**
A1

## (12) EUROPÄISCHE PATENTANMELDUNG

(21) Anmeldenummer: 80101990.2

(22) Anmeldetag: 14.04.80

(51) Int. Cl.³: **B 23 B 47/28**

(30) Priorität: 18.04.79 DE 2915597

(43) Veröffentlichungstag der Anmeldung: **29.10.80**
Patentblatt 80/22

(84) Benannte Vertragsstaaten: **AT BE CH FR GB IT LI LU NL SE**

(71) Anmelder: **Häfele KG, Postfach 160 Freudenstädter Strasse 74, D-7270 Nagold (DE)**

(72) Erfinder: **Koch, Gerhard, Höllerlein 8, D-8551 Wiesenthau (DE)**

(74) Vertreter: **Vogel, Georg, Hermann-Essig-Strasse 35, D-7141 Schwieberdingen (DE)**

(54) Vorrichtung zum Spannen von zwei Plattenelementen und zum Einbringen von Bohrungen in die Plattenelemente.

(57) Die Erfindung betrifft eine Vorrichtung zum Spannen von zwei Plattenelementen im 90°-Stoß oder im T-Stoß und zum Einbringen von senkrecht zur Stoßfläche verlaufenden Bohrungen für einen einteiligen Schraubverbinder. Auf einer Grundplatte (10) sind Anlagestege (12, 13) und Führungsstege (18, 19) angeordnet, die Aufnahmen für die zu spannenden Plattenelemente bilden. Die Plattenelemente werden mittels Feststellschrauben (40) mit Feststellteller (41), die in den Führungsstegen (18, 19) verstellbar geführt sind, gespannt. Auf der Grundplatte (10) sind weitere Führungsblöcke (20, 21, 22) angeordnet, die Führungsaufnahmen (25, 26, 27, 28, 29, 30, 31, 32) für Führungsstifte (50) aufweisen. Diese Führungsaufnahmen sind so ausgelegt, daß zwei Führungsstifte (50) wahlweise senkrecht zum einen oder anderen Plattenelement gerichtet einsetzbar sind. Auf den Führungsstiften (50) ist eine Bohrmaschine so verstellbar, daß die Bohrung stets in die Mitte der Stoßfläche eingebracht wird.

A 3585
vo/poe

5. April 1979 0017949

Firma
H ä f e l e  KG
Freudenstädter Str. 74

7270  N a g o l d

- 1 -

Vorrichtung zum Spannen von zwei Plattenelementen und
zum Einbringen von Bohrungen in die Plattenelemente

Die Erfindung betrifft eine Vorrichtung zum Spannen von
zwei Plattenelementen im 90°-Stoß oder im T-Stoß und zum
Einbringen von senkrecht zur Stoßfläche verlaufenden Bohrungen für einen einteiligen Schraubverbinder in die Plattenelemente.

Wie die DE-AS 24 52 054 zeigt, sind einteilige Schraubverbinder bekannt, mit denen zwei Plattenelemente im 90°-Stoß
oder im T-Stoß miteinander verbunden werden können. Um ein
Ausbrechen der Plattenelemente im Bereich der Verbindungen
zu verhindern, wird in das erste Plattenelement eine senkrecht zur Plattenebene verlaufende Durchgangsbohrung und
in die Stirnfläche des zweiten Plattenelementes mittig eine
Sackbohrung eingebracht. Der einteilige Schraubverbinder weist eine Zentrierspitze auf, an die sich eine Schneidwendel und ein zylinderförmiger Paßabschnitt anschließt.
Der Paßabschnitt wird durch einen Endanschlag abgeschlossen. Die Durchgangsbohrung in dem ersten Plattenelement
ist auf den Durchmesser des Paßabschnittes abgestimmt, während der Durchmesser der Sackbohrung in dem zweiten Plattenelement kleiner als der Außendurchmesser der Schneidwendel des Schraubverbinders ist.

Beim Einbringen der Sackbohrung in die Stirnfläche des
zweiten Plattenelementes ist ferner darauf zu achten, daß
die Sackbohrung genau in die Mitte der Stirnfläche, d.h.
in die Mittelebene des Plattenelementes, zu liegen kommt.

Es ist Aufgabe der Erfindung, eine Vorrichtung zu schaffen, mit der zwei Plattenelemente zur Verbindung im 90°-
Stoß oder im T-Stoß in eindeutiger Stellung zueinander gespannt, d.h. festgelegt, werden können und mit der schnell
und auf einfache Weise eine Bohrmaschine so geführt werden
kann, daß die Durchgangsbohrung in dem ersten Plattenelement und die Sackbohrung in dem zweiten Plattenelement in
der richtigen Stellung zueinander mit den richtigen Durchmessern eingebracht werden können.

Dies wird erfindungsgemäß dadurch erreicht, daß auf einer
Grundplatte ein Gegenlager für die Plattenelemente in Form
von zwei, einen rechten Winkel bildenden Anlagestegen angeordnet ist, daß außerhalb des von den Anlagestegen eingeschlossenen rechten Winkels die Grundplatte im Abstand zu
den Anlagestegen parallel dazu verlaufende Führungsstege
aufweist, in denen jeweils mindestens eine Feststellschraube mit Feststellteller gegen die Anlagestege verstellbar
geführt ist, daß die Führungsstege einen Führungsblock mit

A 3585 — 3 — 0017949

senkrecht zu den gegenüberliegenden Anlagestegen gerichteten Führungsaufnahmen für einen ersten Führungsstift aufweisen, daß im Abstand der von den Anlagestegen gebildeten Ecke des Gegenlagers ein weiterer Führungsblock auf der Grundplatte angeordnet ist, der mit Führungsaufnahmen für einen zweiten Führungsstift versehen ist, wobei diese Führungsaufnahmen zum Teil senkrecht zum einen Anlagesteg und zum Teil senkrecht zum anderen Anlagesteg stehen, und daß auf den beiden, in Führungsaufnahmen senkrecht zu demselben Anlagesteg festgelegten Führungsstiften eine an sich bekannte Bohrmaschinen-Spannvorrichtung verstellbar geführt ist, die mit entsprechenden Führungsaufnahmen für diese Führungsstifte versehen ist.

Mit dieser Vorrichtung können die beiden im 90°-Stoß oder im T-Stoß miteinander zu verbindenden Plattenelemente gegen die Anlagestege verspannt werden. Die beiden Führungsstifte können so in die Führungsaufnahmen der Führungsblöcke eingesetzt werden, daß die in der Bohrmaschinen-Spannvorrichtung festgelegte Bohrmaschine mit einem Stufenbohrer in der richtigen Stellung zu der Stoßfläche der beiden gespannten Plattenelemente geführt wird. Durch entsprechende Auslegung wird der Stufenbohrer stets auf die Mitte der Stoßfläche gerichtet. Die Vorrichtung erlaubt das Umstecken der Führungsstifte, so daß senkrecht zu beiden Anlagestegen der Vorrichtung gebohrt werden kann. Die Verspannung der Plattenelemente in der Vorrichtung kann daher in beiden möglichen Stellungen der Plattenelemente erfolgen, es ist stets die Führung der Bohrmaschine senkrecht zur Stoßfläche der Plattenelemente möglich.

Da die Grundplatte mit den Anlagestegen, den Führungsblöcken und den Führungsstegen vorzugsweise als Metallgußteil hergestellt wird, ist aus Stabilitätsgründen vorgesehen, daß die Anlagestege auf den den Führungsstegen zugekehrten Seiten mit der Grundplatte einen rechten Winkel einschließen, während sie auf den den Führungsstegen abgekehrten Seiten über Rundungen in die Grundplatte übergehen und/oder mittels senkrecht dazu stehender Stege versteift sind und daß die Führungsstege und die Führungsblöcke über Rundungen in die Grundplatte übergehen.

Damit mit der Vorrichtung die beiden Plattenelemente auch im T-Stoß ohne Beeinträchtigung der Richtung des Stoßes gespannt werden können, sieht eine Ausgestaltung vor, daß die Führungsstege mit ihren Führungsblöcken die Länge der zugeordneten Anlagestege nicht übersteigen und daß der Abstand des im Eckbereich der Grundplatte angeordneten Führungsblockes senkrecht zu den Außenanlageflächen der Anlagestege größer ist als die maximale Stärke der zu spannenden Plattenelemente.

Der Materialaufwand für dieVorrichtung läßt sich dadurch klein halten, daß die Grundplatte im eingeschlossenen Bereich der Anlagestege entsprechend der Verbindungslinie der freien Enden der Anlagestege abgeschrägt ist und daß die Grundplatte außerhalb des eingeschlossenen Quadranten im Eckbereich des Gegenlagers mit einer Aussparung versehen ist. Die Aussparung läßt zudem den gespannten Stoß auch von der Unterseite der Grundplatte her erkennen.

Damit der Stufenbohrer der Bohrmaschine sicher auf die Mitte der Stoßfläche der gespannten Plattenelemente gerichtet wird, sieht eine Ausgestaltung vor, daß die Mittelachse zwischen zwei Führungsaufnahmen für die beiden Führungsstifte in einem Abstand zur parallelen Außenanlagefläche des gleichgerichteten Anlagesteges ausgerichtet ist, der der halben Stärke der zu spannenden Plattenelemente entspricht.

Sollen mit der Vorrichtung auch Plattenelemente unterschiedlicher Stärke, z.B. von 16 mm oder 19 mm Stärke, gespannt werden können, sieht eine Weiterbildung vor, daß die Führungsblöcke mit Paaren von Führungsaufnahmen versehen sind, deren Mittelachsen in verschiedenem Abstand zu der parallelen Außenanlagefläche des gleichgerichteten Anlagesteges verlaufen. Die Mittelachsen von zwei Paaren von Führungsaufnahmen stehen dann im Abstand von 8 mm und 9,5 mm zur Außenanlagefläche des gleichgerichteten Anlagesteges. Um eine einheitliche Bohrmaschinen-Spannvorrichtung verwenden zu können, ist die Auslegung so, daß der Abstand der Paare von Führungsaufnahmen für die beiden Führungsstifte konstant und gleich dem Abstand der Führungsaufnahmen der Bohrmaschinen-Spannvorrichtung ist.

Um eine einfache und schnelle Festlegung der Führungsstifte in den Führungsaufnahmen der Führungsblöcke zu erreichen, ist nach einer Weiterbildung vorgesehen, daß in die Führungsaufnahmen Gewindebohrungen münden, in die an sich bekannte Kugelrastelemente einschraubbar sind, daß die Führungsstifte mit umlaufenden Rastnuten für diese Kugelrastelemente versehen sind und daß die Führungsstifte Aufnahmenuten für Sicherungsscheiben oder dgl. aufweisen, die die Einsteckbewegung der Führungsstifte in die Führungsaufnahmen so begrenzen, daß die Kugelrastelemente in die Rastnuten einrasten.

Das Einführen der Führungsstifte in die Führungsaufnahmen und das Aufschieben der Bohrmaschinen-Spannvorrichtung auf die Führungsstifte werden nach einer Ausgestaltung dadurch erleichtert, daß die Stirnseiten der Führungsstifte mit Einführungsphasen versehen sind. Das Aufschieben der Bohrmaschinen-Spannvorrichtung auf die beiden in einem Paar von Führungsaufnahmen festgelegten Führungsstifte läßt sich nach einer weiteren Ausgestaltung dadurch noch erleichtern, daß die beiden Führungsstifte unterschiedlich lang sind. Das Einführen auf die beiden Führungsstifte erfolgt dann nacheinander.

Nach einer weiteren Ausgestaltung ist vorgesehen, daß in den Führungsstegen Gewindebuchsen für die Feststellschrauben eingebracht, vorzugsweise eingegossen sind. Diese Gewindebuchsen werden beim Herstellen der Grundplatte mit den Anlagestegen, den Führungsstegen und den Führungsblöcken mit eingegossen, so daß das nachträgliche Einbringen von Gewindelöchern in das fertige Gußteil entfällt.

Damit der Abstand der Bohrung von der Oberseite der Grundplatte, d.h. von den Rändern der Plattenelemente, bei verschieden starken Plattenelementen etwa gleich groß ist, ist vorgesehen, daß pro Anschlagrichtung jeweils zwei Paare von Führungsaufnahmen vorgesehen sind, die über Kreuz angeordnet sind.

Die Erfindung wird anhand eines in den Zeichnungen dargestellten Ausführungsbeispiels näher erläutert. Es zeigen:

Figur 1　in Draufsicht die Grundplatte der Vorrichtung mit den Anlagestegen, den Führungsstegen und den
Führungsblöcken,

Figur 2　in Seitenansicht die Grundplatte der Vorrichtung mit den Anlagestegen, den Führungsstegen und den
Führungsblöcken,

Figur 3　eine Feststellschraube mit
Festellteller und Drehknopf und

Figur 4　einen Führungsstift zum
Einsatz in eine Führungsaufnahme der
Grundplatte nach Figur 1.

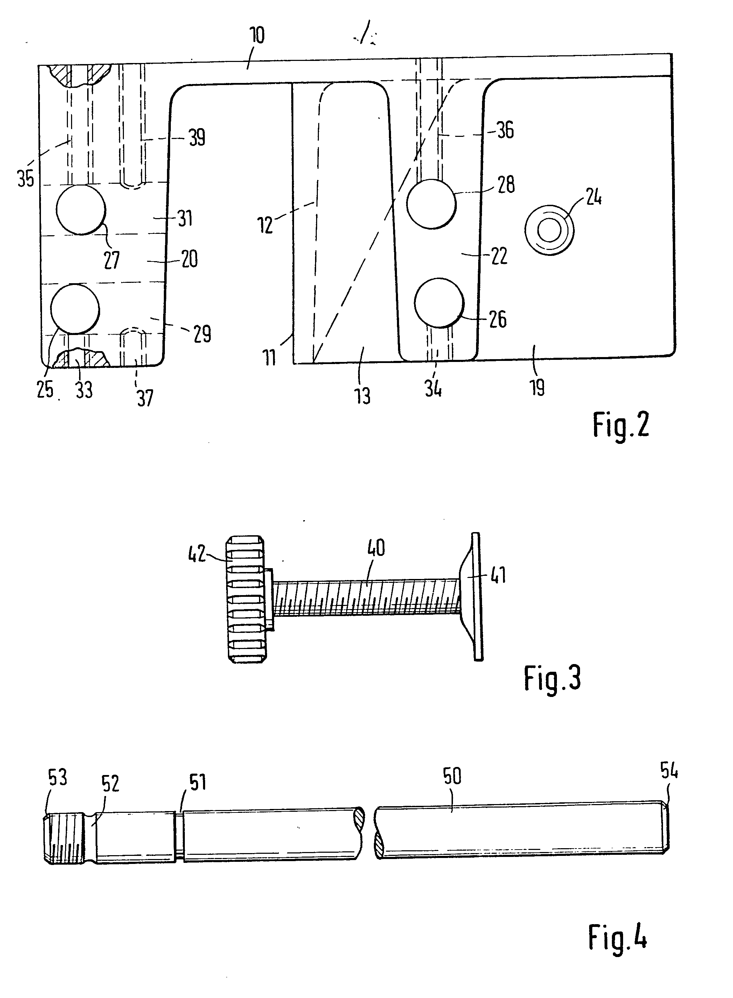

In den Figuren 1 und 2 ist die Grundplatte 10 der erfindungsgemäßen Vorrichtung in zwei verschiedenen Ansichten
gezeigt. Auf dieser als Gußteil hergestellten Grundplatte
10 ist ein Gegenlager 11 für die zu verbindenden Plattenelemente angeordnet, das aus den beiden einen rechten Winkel bildenden und einstückig angeformten Anlagestegen 12
und 13 besteht. Die Höhe dieser Anlagestege 12 und 13 ist
aus der Seitenansicht nach Figur 2 zu entnehmen. Die Grundplatte 10 ist auf der Verbindungslinie 17 der freien Enden
der Anlagestege 12 und 13 abgeschrägt und in dem Eckbereich
außerhalb des eingeschlossenen Quadranten kann die Grundplatte 10 eine (nicht gezeigte) Aussparung aufweisen, über
die auch von der Unterseite der Grundplatte 10 her der Stoß
der miteinander zu verbindenden Plattenelemente einzusehen
ist.

Den Außenseiten der Anlagestege 12 und 13 sind im Abstand dazu verlaufende parallele Führungsstege 18 und 19 zugeordnet, die ebenfalls an der Grundplatte 10 einstückig angeformt sind. Der Abstand senkrecht zu den zugeordneten Anlagestegen 12 und 13 ist größer als die maximale Stärke der miteinander zu verbindenden Plattenelemente. Die Längen der Führungsstege 18 und 19 sind kleiner als die der Anlagestege, so daß z.B. bei einem T-Stoß ein Plattenelement auch über die Führungsstege 18 und 19 hinausreichend verspannt werden kann. Dazu ist es jedoch auch erforderlich, daß der der Ecke des Gegenlagers 11 gegenüberliegende Führungsblock 20 mit den Führungsaufnahmen 25,27,29 und 31 jeweils senkrecht zu den Außenanlageflächen der Anlagestege 12 und 13 einen Abstand aufweist, der größer ist als die maximale Stärke der miteinander zu verspannenden Plattenelemente.

Die Anlagestege 12 und 13 bilden auf ihren Außenanlageflächen zu der Grundplatte 10 hin rechte Winkel, während sie auf den dem eingeschlossenen Quadranten zugekehrten Innenseiten über Rundungen 16 in die Grundplatte 10 übergehen. Die Anlagestege 12 und 13 können auf diesen Seiten durch zusätzliche, senkrecht dazu gerichtete Stege 14 und 15 versteift sein.

Die Führungsstege 18 und 19 enden der Ecke des Gegenlagers 11 zugekehrt in den Führungsblöcken 21 und 22, die mit senkrecht zu den zugeordneten Führungsstegen 18 und 19 gerichteten Führungsaufnahmen 30, 32 bzw. 26,28 versehen sind. Der Führungsblock 20 im Eck der Grundplatte 10 weist Führungsaufnahmen 25,27 bzw. 29,31 auf, die zum Teil senkrecht zum Anlagesteg 13 und zum Teil senkrecht zum Anlagesteg 12 gerichtet sind.

A 3585 — 9 — 0017949

In den Führungsstegen 18 und 19 sind Gewindebuchsen 23 und 24 eingegossen, die eine Feststellschraube 40 nach Figur 2 verstellbar aufnehmen. Das dem Anlagesteg 12 bzw. 13 zugekehrte Ende der Feststellschraube 40 trägt ein Feststellteller 41, das vorzugsweise frei drehbar mit der Feststellschraube 40 verbunden ist. Das andere Ende der Feststellschraube 40 trägt drehfest einen Drehknopf 42, der das Festziehen und Lösen der Feststellschraube 40 erleichtert. Mit diesen Feststellschrauben 40 können die auf Stoß gelegten Plattenelemente gegen die Außenanlageflächen der Anlagestege 12 und 13 verspannt werden.

Damit die so im Stoß verspannten Plattenelemente mit den Bohrungen für den einteiligen Schraubverbinder versehen werden können, werden in den Führungsblöcken 20 und 21 die Führungsaufnahmen 30, 32 und 29,31 eingebracht, die senkrecht zum Anlagesteg 12 gerichtet sind.

In gleicher Weise werden auch Führungsaufnahmen 25,27 und 26,28 in die Führungsblöcke 20 und 22 eingebracht, die senkrecht zum Anlagesteg 13 gerichtet sind.

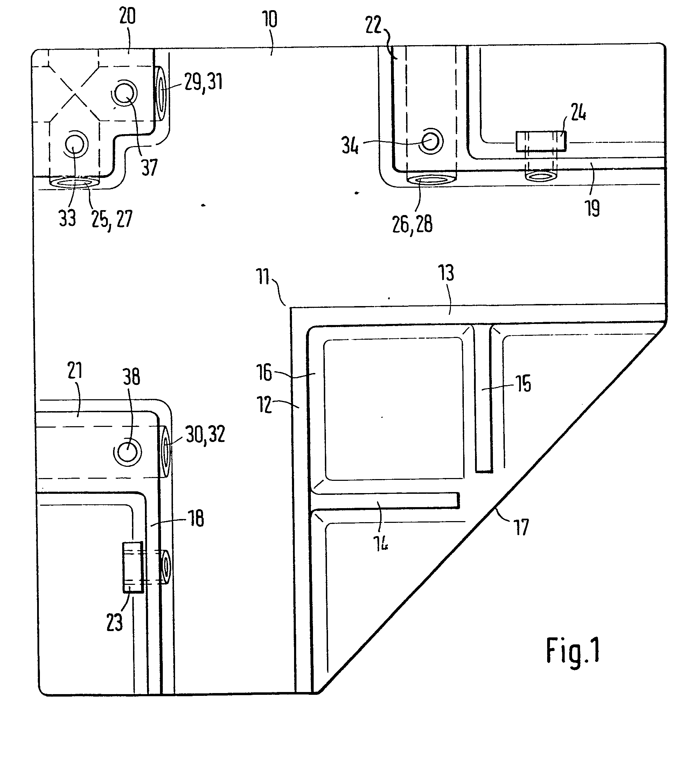

In jede der Führungsaufnahme 25 bis 32 mündet eine Gewindebohrung 33 bis 39 ein, in die ein an sich bekanntes Kugelrastelement eingeschraubt ist. In die Führungsaufnahmen, die paarweise mit einem konstanten Abstand eingebracht sind, werden zwei Führungsstifte 50 nach Figur 4 eingesteckt. Die Stirnseiten der Führungsstifte 50 tragen Einführungsphasen 53 und 54. Die Führungsstifte 50 sind mit einer umlaufenden Rastnut 52 und einer Aufnahmenut 51 für eine Sicherungsscheibe oder dgl. versehen. Die in der Aufnahmenut 51 festgelegte Sicherungsscheibe oder dgl. begrenzt die Einsteckbewegung des Führungsstiftes 50 so, daß das Kugelrastelement der Führungsaufnahme in die Rastnut 52 einrasten kann.

Es sind Bohrmaschinen-Spannvorrichtungen bekannt, die eine Spannaufnahme für den Bohrmaschinenkopf und zwei Führungsaufnahmen, die parallel und im gleichen Abstand zur Längsachse des Bohrfutters gerichtet sind. Wird der Abstand der Paare von Führungsaufnahmen in den Führungsblöcken 20, 21 und 22 auf diesen Abstand der Spannvorrichtung abgestimmt, dann kann diese auf zwei in den Führungsaufnahmen der Führungsblöcke 20, 21 und 22 festgelegte Führungsstifte 50 aufgeschoben werden.

Da die Plattenelemente in der Vorrichtung wahlweise so gespannt werden können, daß die Stoßfläche parallel zum Anlagesteg 12 oder parallel zum Anlagesteg 13 verläuft, müssen die Führungsaufnahmen für die Führungsstifte der Bohrmaschinen-Spannvorrichtung auch in zwei Richtungen angeordnet sein. Die Führungsaufnahmen 29 bis 32 in den Führungsblöcken 20 und 21 sind senkrecht zum Anlagesteg 12 gerichtet und die Führungsaufnahmen 25 bis 28 in den Führungsblöcken 20 und 22 senkrecht zum Anlagesteg 13.

Die Führungsaufnahmen bilden, wie die Ansicht nach Figur 2 zeigt, über Kreuz Paare mit konstantem Abstand. So haben die Führungsaufnahmen 25 und 28 von Mittelachse zu Mittelachse den gleichen Abstand wie die Führungsaufnahmen 26 und 27. Dieser Abstand entspricht dem Abstand der Führungsaufnahmen in der Bohrmaschinen-Spannvorrichtung. Da der Bohrer der Bohrmaschine auf der Mitte dieses Abstandes angeordnet ist, müssen diese Führungsaufnahmen 25 bis 28 auch noch auf die Außenanlagefläche des Anlagesteges 12 ausgerichtet werden. Sind die beiden Führungsstifte 50 in die Führungsaufnahmen 25 und 28 eingesteckt, dann hat die Bohrerachse einen größeren Abstand zu der Außenanlagefläche des Anlagesteges 12, z.B. 9,5 mm. Dann lassen sich Plattenelemente mit einer Stärke von 19 mm mittig anbohren. Die Führungsaufnahmen 26 und 27 haben den gleichen Abstand wie die Führungsaufnahmen 25 und 28, die Mitte mit der Bohrerachse ist aber so versetzt, daß sie einen kleineren Abstand, z.B. 8 mm, zu der Außenanlagefläche des Anlagesteges 12 hat. Daher lassen sich beim Einstecken der Führungsstifte 50 in die Führungsaufnahmen 26 und 27 Plattenelemente mit einer Stärke von 16 mm mittig anbohren. Die kreuzweise Anordnung der Paare von Führungsaufnahmen bringt für die Bohrerachse dabei stets etwa gleichen Abstand von der Oberseite der Grundplatte 10, d.h. von den Rändern der gespannten Plattenelemente.

In ähnlicher Weise sind die Paare von Führungsaufnahmen 29, 32 und 30,31 in den Führungsblöcken 20 und 21 senkrecht zum Anlagesteg 12 angeordnet und mit ihren Mitten, d.h. Bohrerachsen, auf die Abstände zur Außenanlagefläche des Anlagesteges 13 ausgerichtet.

Ansprüche:

1. Vorrichtung zum Spannen von zwei Plattenelementen im 90°-Stoß oder im T-Stoß und zum Einbringen von senkrecht zur Stoßfläche verlaufenden Bohrungen für einen einteiligen Schraubverbinder in die Plattenelemente,

dadurch gekennzeichnet,

daß auf einer Grundplatte (10) ein Gegenlager (11) für die Plattenelemente in Form von zwei, einen rechten Winkel bildenden Anlagestegen (12,13) angeordnet ist,

daß außerhalb des von den Anlagestegen (12,13) eingeschlossenen rechten Winkels die Grundplatte (10) im Abstand zu den Anlagestegen (12,13) parallel dazu verlaufende Führungsstege (18,19) aufweist, in denen jeweils mindestens eine Feststellschraube (40) mit Feststellteller (41) gegen die Anlagestege (12, 13) verstellbar geführt (23,24) ist,

daß die Führungsstege (18,19) einen Führungsblock (21,22) mit senkrecht zu den gegenüberliegenden Anlagestegen (12,13) gerichteten Führungsaufnahmen (26,28 bzw. 30,32) für einen ersten Führungsstift (50) aufweisen, daß im Abstand der von den Anlagestegen (12,13) gebildeten Ecke des Gegenlagers (11) ein weiterer Führungsblock (20) auf der Grundplatte (10) angeordnet ist, der mit Führungsaufnahmen (25, 27 bzw. 29,31) für einen zweiten Führungsstift (50) versehen ist, wobei diese Führungsaufnahmen (25,27 bzw. 29,31) zum Teil (z.B. 29,31) senkrecht zum einen Anlagesteg (z.B. 12) und zum Teil (z.B. 25,27) senkrecht zum anderen Anlagesteg (z.B. 13) stehen, und daß auf den beiden, in Führungsaufnahmen (z.B. 25,26 bzw. 29,30) senkrecht zu demselben Anlagesteg (13 bzw. 12) festgelegten Führungsstiften (50) eine an sich bekannte Bohrmaschinen-Spannvorrichtung verstellbar geführt ist, die mit entsprechenden Führungsaufnahmen für diese Führungsstifte (50) versehen ist.

2. Vorrichtung nach Anspruch 1,
dadurch gekennzeichnet,
daß die Anlagestege (12,13) auf den den Führungsstegen zugekehrten Seiten mit der Grundplatte (10) einen rechten Winkel einschließen, während sie auf den den Führungsstegen abgekehrten Seiten über Rundungen (16) in die Grundplatte (10) übergehen und/oder mittels senkrecht dazu stehender Stege (14,15) versteift sind.

3. Vorrichtung nach Anspruch 1,
dadurch gekennzeichnet,
daß die Führungsstege (18,19) und die Führungsblöcke (20,21,22) über Rundungen in die Grundplatte (10) übergehen.

4. Vorrichtung nach Anspruch 3,
dadurch gekennzeichnet,
daß die Führungsstege (18,19) mit ihren Führungsblökken (21,22) die Länge der zugeordneten Anlagestege (12, 13) nicht übersteigen und daß der Abstand des im Eckbereich der Grundplatte (10) angeordneten Führungsblockes (20) senkrecht zu den Außenanlageflächen der

A 3585 — 3 —

0017949

Anlagestege (12,13) größer ist als die maximale Stärke der zu spannenden Plattenelemente.

5. Vorrichtung nach einem der Ansprüche 1 bis 4, dadurch gekennzeichnet, daß die Grundplatte (10) im eingeschlossenen Bereich der Anlagestege (12,13) entsprechend der Verbindungslinie (17) der freien Enden der Anlagestege (12,13) abgeschrägt ist und daß die Grundplatte (10) außerhalb des eingeschlossenen Quadranten im Eckbereich des Gegenlagers (11) mit einer Aussparung versehen ist.

6. Vorrichtung nach einem der Ansprüche 1 bis 5, dadurch gekennzeichnet, daß die Mittelachse zwischen zwei Führungsaufnahmen (25,26 bzw. 27,28 bzw. 29,30 bzw. 31,32) für die beiden Führungsstifte (50) in einem Abstand zur parallelen Außenanlagefläche des gleichgerichteten Anlagesteges (12 bzw. 13) ausgerichtet ist, der der halben Stärke der zu spannenden Plattenelemente entspricht.

7. Vorrichtung nach Anspruch 6, dadurch gekennzeichnet, daß die Führungsblöcke (20,21,22) mit Paaren von Führungsaufnahmen (25,26 und 27,28 bzw. 29,30 und 31,32) versehen sind, deren Mittelachsen in verschiedenem Abstand zu der parallelen Außenanlagefläche des gleichgerichteten Anlagesteges (12 bzw. 13) verlaufen.

A 3585 — 4 — 0017949

8.  Vorrichtung nach Anspruch 6 und 7,
    dadurch gekennzeichnet;
    daß der Abstand der Paare von Führungsaufnahmen (25, 26 bzw. 27,28 bzw. 29,30 bzw. 31,32) für die beiden Führungsstifte (50) konstant und gleich dem Abstand der Führungsaufnahmen der Bohrmaschinen-Spannvorrichtung ist.

9.  Vorrichtung nach einem der Ansprüche 1 bis 8,
    dadurch gekennzeichnet,
    daß in die Führungsaufnahmen (25,26,27,28,29,30,31,32) Gewindebohrungen (33,34,35,36,37,38,39) münden, in die an sich bekannte Kugelrastelemente einschraubbar sind, daß die Führungsstifte (50) mit umlaufenden Rastnuten (52) für diese Kugelrastelemente versehen sind und daß die Führungsstifte (50) Aufnahmenuten (51) für Sicherungsscheiben oder dgl. aufweisen, die die Einsteckbewegung der Führungsstifte (50) in die Führungsaufnahmen (25 bis 32) so begrenzen, daß die Kugelrastelemente in die Rastnuten (52) einrasten.

10. Vorrichtung nach Anspruch 9,
    dadurch gekennzeichnet,
    daß die Stirnseiten der Führungsstifte (50) mit Einführungsphasen (53,54) versehen sind.

11. Vorrichtung nach einem der Ansprüche 1 bis 10,
    dadurch gekennzeichnet,
    daß die beiden Führungsstifte (50) unterschiedlich lang sind.

0017949

12. Vorrichtung nach einem der Ansprüche 1 bis 11,
    dadurch gekennzeichnet;
    daß in den Führungsstegen (18,19) Gewindebuchsen
    (23,24) für die Feststellschrauben (40) eingebracht,
    vorzugsweise eingegossen sind.

13. Vorrichtung nach einem der Ansprüche 1 bis 12,
    dadurch gekennzeichnet,
    daß pro Anschlagrichtung jeweils zwei Paare von Füh-
    rungsaufnahmen (25,28 und 26,27 bzw. 29,32 und 31,30)
    vorgesehen sind, die über Kreuz angeordnet sind.

Fig.2

Fig.3

Fig.4

A 3585

1/2

Fig.1

A 3585

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - B - 2 620 658 (BESSEY) | 1 |
| A | DE - A - 2 503 162 (MOHLE) | 1 |
| A | FR - A - 2 381 445 (HEBOR) | 1 |
| A | US - A - 3 767 183 (VAN GELDER) | 1 |

------

**KLASSIFIKATION DER ANMELDUNG (Int.Cl. 3)**

B 23 B 47/28

**RECHERCHIERTE SACHGEBIETE (Int. Cl. 3)**

B 23 B 47/00
B 23 Q  3/00
B 25 B  5/00
B 25 B 11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-07-1980 | BOGAERT |

EPA form 1503.1  06.78